# FASCICULE DE BREVET EUROPEEN

(11) **EP 1 375 343 B1**
(45) Date de publication et mention de la délivrance du brevet: **11.03.2009**
(21) Numéro de dépôt: 03291275.0
(22) Date de dépôt: 28.05.2003
(51) Int. Cl.: B64C 13/16

(54) **Procédé et dispositif pour réduire les mouvements vibratoires du fuselage d'un aéronef**
Verfahren und Vorrichtung zum Vermindern von Vibrationsbewegungen eines Flugzeugrumpfes
Method and apparatus for reducing vibratory movements of an aircraft fuselage

(30) Priorité: 21.06.2002 FR 0207715
(43) Date de publication de la demande: 02.01.2004
(73) Titulaire: AIRBUS France, 31060 Toulouse (FR)
(72) Inventeur: Kubica, Francois, 31100 Toulouse (FR); Le Garrec, Christophe, 31000 Toulouse (FR); Schierenbeck, Detlef, 28757 Bremen (DE)
(74) Mandataire: Bonnetat, Christian

(56) Documents cités:
- US-A- 4 479 620
- US-A- 4 615 497
- US-A- 4 706 902
- US-A- 5 135 186
- US-A- 5 588 620

## Description

La présente invention concerne un procédé et un dispositif pour réduire les mouvements vibratoires du fuselage d'un aéronef, engendrés par un ou plusieurs moteurs.

On sait que, pour le confort des passagers et de l'équipage et pour la durée de vie de l'aéronef, on cherche à éliminer autant que possible les vibrations du fuselage. Pour ce faire, il est usuel de détecter et de mesurer les vibrations dans le fuselage et d'agir sur les causes de ces vibrations afin d'en réduire les effets. Par exemple, le document US-A-4 706 902 décrit un procédé et une installation ayant pour but de réduire le tremblement aérodynamique des ailes d'un avion susceptible de provoquer un régime de vibrations de celles-ci par résonance mécanique. Pour ce faire, des détecteurs, tels que des jauges de contrainte, sont disposés sur les ailes et commandent des gouvernes associées.

Lorsque les causes des vibrations, par exemple les moteurs, sont éloignées du fuselage et que, de plus, l'aéronef est de grandes dimensions, un tel processus de réduction des vibrations du fuselage est peu efficace, à cause de la distance séparant ledit fuselage desdites causes de vibration.

L'objet de la présente invention est de remédier à cet inconvénient dans le cas où la cause desdites vibrations est un ou plusieurs moteurs de l'aéronef.

A cette fin, selon l'invention, le procédé pour réduire les mouvements vibratoires du fuselage d'un aéronef, lesdits mouvements vibratoires étant engendrés par les moteurs dudit aéronef qui comporte deux ailes fixes symétriques par rapport audit fuselage, chacune desdites ailes étant pourvue de gouvernes articulées sur son bord de fuite et portant au moins un desdits moteurs, est remarquable en ce que :
- on associe au moins un accéléromètre à au moins un moteur ;
- on mesure les accélérations subies par ledit moteur, ainsi équipé d'au moins un accéléromètre, suivant au moins une direction transversale audit moteur ;
- à l'aide des mesures accélérométriques ainsi obtenues, on détermine au moins un ordre de commande oscillatoire qui, appliqué à au moins une gouverne de l'aile portant ledit moteur, est apte à contrecarrer les mouvements vibratoires dudit moteur dans ladite direction, ledit ordre de commande étant déterminé à partir de relations préétablies qui sont issues du modèle aéroélastique, spécifique audit aéronef, et qui, pour chaque accélération subie par ledit aéronef à l'emplacement dudit moteur et dans ladite direction, sont aptes à délivrer un tel ordre de commande ; et
- on applique ledit ordre de commande sur ladite gouverne.

Ainsi, les mouvements vibratoires du fuselage sont détectés à leur source (le ou les moteurs) et sont contrecarrés à proximité de leur source, puisque les gouvernes d'une aile d'aéronef ne sont jamais très éloignées des moteurs portés par celle-ci. La réduction des vibrations dans le fuselage, conformément à la présente invention, peut donc être particulièrement performante.

Bien entendu, les accéléromètres associés aux moteurs peuvent être montés directement sur ceux-ci ou bien placés en un point proche desdits moteurs, où se ressentent les vibrations de ceux-ci, par exemple le pylône qui les porte.

On remarquera que, dans le procédé selon l'invention, ledit ordre de commande est avantageusement déterminé à partir de relations préétablies qui sont issues du modèle aéroélastique spécifique audit aéronef, et qui, pour chaque accélération subie par ledit aéronef à l'emplacement dudit moteur et dans ladite direction, sont aptes à délivrer un tel ordre de commande. Ce modèle aéroélastique est bien entendu connu du constructeur de l'aéronef, qui l'a calculé de façon théorique. Les relations préétablies, utilisées dans la présente invention, peuvent être dérivées de ce modèle théorique, ou bien d'un modèle établi de façon purement expérimental, lors de vols d'essais de l'aéronef. En variante, le modèle utilisé peut être le modèle théorique, complété et/ou amélioré de façon expérimentale.

On sait qu'un tel modèle aéroélastique indique, entre autres informations, d'une part, l'amplitude, la fréquence et la phase des vibrations engendrées dans le fuselage de l'aéronef en fonction des accélérations subies par l'aéronef au niveau de chaque moteur et, d'autre part, l'amplitude, la fréquence et la phase des vibrations engendrées dans le fuselage de l'aéronef par les battements alternatifs de chaque gouverne. Ainsi, ce modèle aéroélastique de l'aéronef permet d'établir lesdites relations déterminant la commande qu'il faut adresser à une gouverne pour contrecarrer les vibrations mesurées d'un moteur, afin que les vibrations du fuselage soient nulles, ou à tout le moins aussi faibles que possible.

Aussi, dans le procédé conforme à la présente invention, ledit ordre de commande est calculé à partir des informations fournies, en fonction desdites mesures accélérométriques, par une table dans laquelle sont enregistrées lesdites relations issues du modèle aéroélastique de l'aéronef.

De préférence, la direction de mesure desdites accélérations est verticale et/ou horizontale (c'est-à-dire, dans ce dernier cas, latérale par rapport au fuselage).

Avantageusement, les gouvernes choisies pour contrecarrer les mouvements vibratoires du ou des moteurs sont les ailerons de l'aéronef, puisque le braquage symétrique d'ailerons symétriques par rapport au fuselage influe sur l'accélération verticale de l'aéronef, alors que le braquage antisymétrique de ces ailerons influe sur l'accélération latérale de ce dernier.

Le procédé conforme à la présente invention est particulièrement avantageux à mettre en oeuvre en cas de turbulences atmosphériques pendant le vol. On sait en effet que les ailes fixes d'un aéronef sont relativement souples, de sorte que, à l'apparition de turbulences, les moteurs de l'aéronef (particulièrement les moteurs externes) se mettent à osciller. Dans un premier temps, l'oscillation est majoritairement verticale et en phase pour les deux ailes. Cependant, l'aéronef n'étant pas parfaitement symétrique par rapport à l'axe longitudinal du fuselage, il apparaît un moment où les moteurs des deux ailes n'oscillent plus en phase, leurs mouvements vibratoires ayant alors une composante latérale, de sorte que lesdits moteurs oscillent sur des trajectoires approximativement elliptiques.

Un autre objet de la présente invention est donc de pouvoir contrer de tels mouvements vibratoires quasi-elliptiques des moteurs.

A cette fin, conformément à la présente invention :
- on associe au moins un accéléromètre à au moins un moteur de chaque aile ;
- on mesure les accélérations subies par chacun desdits moteurs, ainsi équipés chacun d'au moins un accéléromètre, suivant au moins une direction transversale audit moteur ;
- à l'aide des mesures accélérométriques ainsi obtenues, on détermine au moins un ordre de commande oscillatoire qui, appliqué à des gouvernes desdites ailes, est apte à contrecarrer les mouvements vibratoires desdits moteurs dans ladite direction ; et
- on applique ledit ordre de commande sur lesdites gouvernes.

De préférence, à des fins de simplification :
- on mesure les accélérations subies par deux moteurs dudit aéronef, symétriques par rapport audit fuselage, suivant ladite direction transversale auxdits moteurs ;
- on calcule la moyenne desdites accélérations subies par ces deux moteurs symétriques ;
- on détermine un ordre de commande commun à l'aide desdites relations préétablies à partir dudit modèle aéroélastique ; et
- on applique à deux gouvernes, symétriques par rapport audit fuselage, ledit ordre de commande commun.

Dans le cas où chaque aile dudit aéronef comporte au moins deux types d'ailerons, à savoir au moins un aileron externe et au moins un aileron interne, on peut :
- déterminer un premier ordre de commande apte à contrecarrer les mouvements vibratoires verticaux d'au moins deux moteurs symétriques par rapport audit fuselage ;
- déterminer un second ordre de commande apte à contrecarrer les mouvements vibratoires latéraux desdits moteurs ;
- appliquer ledit premier ordre de commande à au moins deux ailerons d'un des deux types, disposés symétriquement par rapport audit fuselage, de façon que ces deux ailerons se cabrent de façon symétrique dans le même sens ; et
- appliquer ledit second ordre de commande à au moins deux ailerons de l'autre des deux types, également disposés symétriquement par rapport audit fuselage, de façon que ces deux ailerons se braquent de façon antisymétrique en sens opposés.

Dans la mise en oeuvre du procédé conforme à la présente invention, dans le cas où l'aéronef comporte plusieurs moteurs par aile, il est évident que ce sont les moteurs externes qui subissent les vibrations oscillatoires de plus grande amplitude, de sorte qu'il est suffisant, pour une bonne réduction des mouvements vibratoires du fuselage, que seuls ces moteurs externes soient pourvus d'accéléromètres.

La présente invention concerne de plus un dispositif pour réduire les mouvements vibratoires du fuselage d'un aéronef comportant deux ailes fixes symétriques par rapport audit fuselage, chacune desdites ailes étant pourvue de gouvernes articulées sur son bord de fuite et portant au moins un moteur. Un tel dispositif est remarquable en ce qu'il comporte :
- des accéléromètres associés à au moins deux moteurs symétriques l'un de l'autre par rapport audit fuselage et aptes à mesurer les accélérations respectives de ces moteurs suivant au moins une direction transversale auxdits moteurs ;
- une table dans laquelle sont enregistrées des relations préétablies à partir du modèle aéroélastique concernant spécifiquement ledit aéronef ;
- des moyens de calcul aptes à calculer, à l'aide des mesures accélérométriques délivrées par lesdits accéléromètres et des relations préétablies de ladite table, au moins un ordre de commande qui, appliqué à des gouvernes symétriques par rapport audit fuselage, est apte à contrecarrer les mouvements vibratoires desdits moteurs dans ladite direction ; et
- des moyens pour appliquer ledit ordre de commande auxdites gouvernes.

Dans le cas où ledit aéronef est pourvu d'un système de commandes de vol électriques, il est avantageux que lesdits moyens de calcul et lesdits moyens d'application dudit ordre de commande fassent partie dudit système de commandes de vol électriques.

Les figures du dessin annexé feront bien comprendre comment l'invention peut être réalisée. Sur ces figures, des références identiques désignent des éléments semblables.

La figure 1 est une vue de face schématique d'un avion quadriréacteur gros porteur subissant des turbulences atmosphériques.

La figure 2 est une vue schématique d'un exemple de mise en oeuvre de la présente invention pour contrecarrer les effets de ces turbulences sur ledit avion.

La figure 3 montre le schéma synoptique du dispositif utilisé dans l'exemple de mise en oeuvre de l'invention illustré par la figure 2.

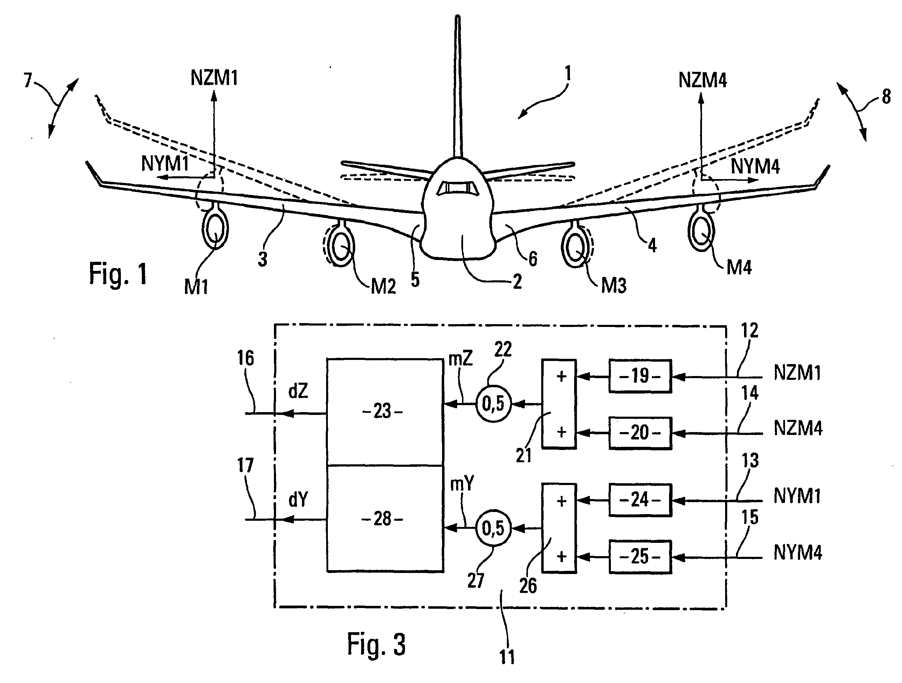

L'avion 1, représenté schématiquement de face sur la figure 1, comporte un fuselage 2 et deux ailes 3 et 4, disposées symétriquement par rapport audit fuselage. Chaque aile porte deux moteurs et les quatre moteurs de l'avion portent les références M1 à M4, les moteurs M1 et M2 étant portés par l'aile 3 et les moteurs M3 et M4 par l'aile 4.

Les ailes 3 et 4 sont souples et, lorsque l'avion 1 est soumis à des turbulences atmosphériques, elles oscillent autour de leur emplanture respective, 5 ou 6, comme cela est illustré sur la figure 1 par les positions en pointillés et par les flèches 7 et 8. Il en résulte que les moteurs M1 à M4 entrent eux-mêmes en oscillations, les oscillations des moteurs externes M1 et M4 ayant, du fait de leur position, une plus grande amplitude que celles des moteurs internes M2 et M3. Comme cela a été mentionné ci-dessus, ces oscillations comportent une composante verticale et une composante horizontale, de sorte que les moteurs externes M1 et M4 subissent des accélérations verticales oscillatoires, désignées par NZM1 et NZM4 respectivement, ainsi que des accélérations latérales oscillatoires, désignées par NYM1 et NYM4 respectivement.

Bien entendu, les oscillations des moteurs induisent des vibrations dans le fuselage 2, qui nuisent au confort des passagers et de l'équipage et fatiguent la structure de l'avion 1.

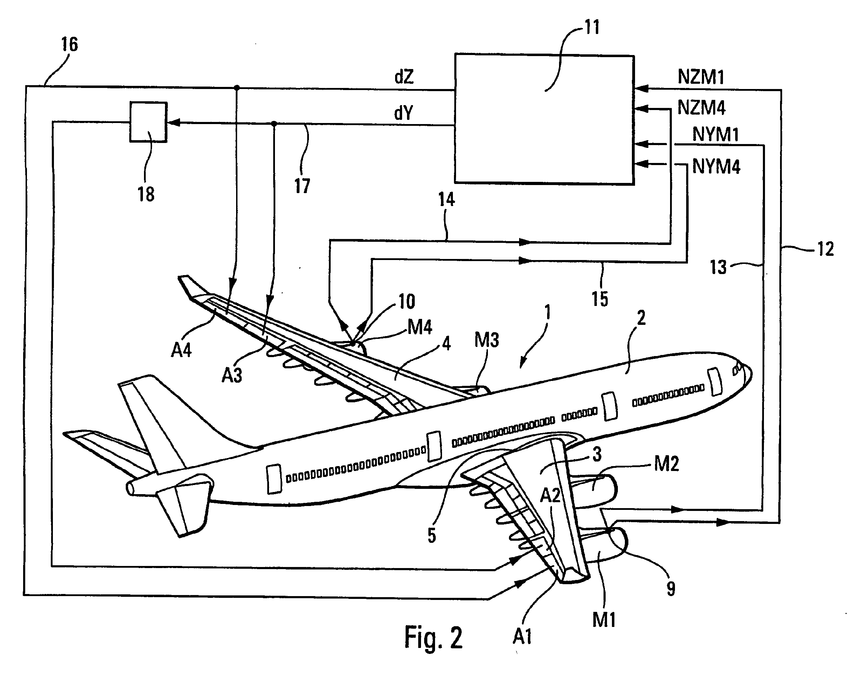

Sur la figure 2, on a représenté en perspective, en vue de dessus, l'avion gros porteur quadriréacteur 1 et on peut y voir les différentes gouvernes articulées sur le bord de fuite des ailes 3 et 4. Entre autres gouvernes, l'aile 3 porte un aileron externe A1 et un aileron interne A2. De même, l'aile 4 comporte un aileron interne A3 (symétrique de l'aileron A2) et un aileron externe A4 (symétrique de l'aileron A1).

De plus, chaque moteur externe M1 et M4 porte un système accélérométrique 9 ou 10, respectivement, apte à mesurer les accélérations oscillatoires NZM1, NYM1, NZM4 et NYM4.

Par ailleurs, dans l'avion 1 est disposé un dispositif de commande 11 (représenté à l'extérieur dudit avion 1 sur la figure 2 pour des raisons de clarté de dessin), apte à commander les ailerons A1 à A4 pour contrecarrer, à l'intérieur du fuselage 2, les effets des oscillations desdits moteurs. Le dispositif de commande 11, de préférence, fait partie du système de commandes de vol électriques (non représenté) de l'avion 1.

Le dispositif de commande 11 reçoit, respectivement par des lignes 12 et 13, les mesures de l'accélération verticale NZM1 et de l'accélération latérale NYM1 délivrées par le système accélérométrique 9. De même, respectivement par des lignes 14 et 15, le dispositif de commande 11 reçoit, du système accélérométrique 10, les mesures de l'accélération verticale NZM4 et de l'accélération latérale NYM4.

A partir des mesures des accélérations NZM1, NZM4, NYM1 et NYM4, le dispositif de commande 11 calcule un premier ordre de commande dZ qui, appliqué en commun et de façon symétrique aux ailerons externes A1 et A4 (ou aux ailerons internes A2 et A3) par une ligne 16, est apte à contrecarrer les effets des accélérations verticales NZM1 et NZM4, et un second ordre de commande dY qui, appliqué en commun et de façon antisymétrique aux ailerons internes A2 et A3 (ou aux ailerons externes A1 et A4) par une ligne 17, est apte à contrecarrer les effets des accélérations latérales NYM1 et NYM4. Un inverseur 18 est alors interposé dans la ligne 17 pour que les braquages des ailerons A2 et A3 (ou A1 et A4) soient antisymétriques, c'est-à-dire de même amplitude, mais de sens opposés.

Dans l'exemple de réalisation de la figure 3, le dispositif de commande 11 comporte un filtre 19 et un filtre 20, qui reçoivent respectivement les mesures des accélérations verticales NZM1 et NZM4 des lignes 12 et 14. Les filtres 19 et 20 ont pour objet de supprimer les bruits de fond et d'effectuer la fonction d'antirepliement de spectre. Ils effectuent un filtrage à haute fréquence (supérieure à 10 Hz), qui n'affecte pas les performances du dispositif 11. Les accélérations NZM1 et NZM4, ainsi filtrées, sont additionnées dans un additionneur 21, après quoi la somme ainsi obtenue est divisée par deux en 22. On obtient ainsi un signal mZ correspondant à la moyenne des accélérations NZM1 et NZM4.

Par ailleurs, le dispositif de commande 11 comporte une table 23, qui est préétablie à partir du modèle aéroélastique décrivant les moments vibratoires de l'avion 1 (éventuellement complété par des résultats d'essais en vol) et à laquelle est adressé le signal mZ. En réponse à ce signal mZ, la table 23 est apte à délivrer, à sa sortie 16, l'amplitude, la fréquence et la phase du premier ordre de commande dZ qui, appliqué de façon symétrique aux ailerons externes A1 et A4, permettra à ceux-ci de créer des accélérations verticales sur le fuselage 2 s'opposant aux accélérations verticales NZM1 et NZM4.

De façon symétrique à ce qui vient d'être décrit, les accélérations latérales NYM1 et NYM4 sont, dans le dispositif de commande 11, filtrées par des filtres 24 et 25 respectifs (semblables aux filtres 19 et 20), puis additionnées dans un additionneur 26, leur somme étant ensuite divisée par deux en 27. La moyenne mY ainsi obtenue est adressée à une table 28, qui est également préétablie à partir du modèle aéroélastique de l'avion 1 et qui est apte à délivrer à sa sortie 17, pour cette moyenne mY, l'amplitude, la fréquence et la phase du second ordre de commande dY qui, appliqué de façon antisymétrique (grâce à l'inverseur 18) aux ailerons internes A2 et A3, permettra à ceux-ci de créer des accélérations latérales sur le fuselage 2 s'opposant aux accélérations horizontales NYM1 et NYM4.

Afin de ne pas solliciter de façon continuelle les servocommandes actionnant les ailerons A1 à A4, il peut être avantageux de prévoir, par exemple aux entrées 12 à 15 du dispositif de commande 11, des dispositifs à seuils (non représentés) ne permettant la génération des ordres dZ et dY que lorsque les accélérations NZM1, NZM4, NYM1 et NYM4 dépassent un seuil prédéterminé et/ou une durée prédéterminée.

## Revendications

1. Procédé pour réduire les mouvements vibratoires du fuselage (2) d'un aéronef (1), lesdits mouvements vibratoires étant engendrés par les moteurs dudit aéronef qui comporte deux ailes fixes (3, 4) symétriques par rapport audit fuselage (2), chacune desdites ailes (3, 4) étant pourvue de gouvernes (A1 à A4) articulées sur son bord de fuite et portant au moins un desdits moteurs (M1 à M4),
**caractérisé en ce que** :
- on associe au moins un accéléromètre (9, 10) à au moins un moteur (M 1 à M4) ;
- on mesure les accélérations subies par ledit moteur, ainsi équipé d'au moins un accéléromètre, suivant au moins une direction transversale audit moteur ;
- à l'aide des mesures accélérométriques ainsi obtenues, on détermine au moins un ordre de commande oscillatoire (dZ, dY) qui, appliqué à au moins une gouverne de l'aile portant ledit moteur, est apte à contrecarrer les mouvements vibratoires dudit moteur dans ladite direction, ledit ordre de commande (dZ, dY) étant déterminé à partir de relations préétablies qui sont issues du modèle aéroélastique (23, 28), spécifique audit aéronef, et qui, pour chaque accélération subie par ledit aéronef à l'emplacement dudit moteur et dans ladite direction, sont aptes à délivrer un tel ordre de commande (dZ, dY) ; et
- on applique ledit ordre de commande sur ladite gouverne.

2. Procédé selon la revendication 1,
**caractérisé en ce que** :
- on associe au moins un accéléromètre (9, 10) à au moins un moteur (M1 à M4) de chaque aile (3, 4) ;
- on mesure les accélérations subies par chacun desdits moteurs, ainsi équipés chacun d'au moins un accéléromètre, suivant ladite direction transversale audit moteur ; et
- à l'aide des mesures accélérométriques ainsi obtenues, on détermine ledit ordre de commande oscillatoire (dZ, dY).

3. Procédé selon l'une des revendications 1 ou 2,
**caractérisé en ce que** :
- on mesure les accélérations subies par deux moteurs (M1, M4) dudit aéronef, symétriques par rapport audit fuselage (2), suivant ladite direction transversale auxdits moteurs ;
- on calcule la moyenne desdites accélérations subies par ces deux moteurs symétriques ;
- on détermine un ordre de commande commun (dZ, dY) à l'aide desdites relations préétablies à partir dudit modèle aéroélastique (23, 28) ; et
- on applique à deux gouvernes, symétriques par rapport audit fuselage, ledit ordre de commande commun.

4. Procédé selon l'une des revendications 1 à 3,
**caractérisé en ce qu'**une direction de mesure desdites accélérations est verticale.

5. Procédé selon l'une des revendications 1 à 4,
**caractérisé en ce qu'**une direction de mesure desdites accélérations est horizontale, c'est-à-dire latérale par rapport audit aéronef (1).

6. Procédé selon l'une des revendications 1 à 5,
**caractérisé en ce que** lesdites gouvernes choisies pour contrecarrer les mouvements desdits moteurs sont des ailerons.

7. Procédé selon l'une des revendications 1 à 6, dans lequel chaque aile dudit aéronef (1) comporte au moins deux types d'ailerons, à savoir au moins un aileron externe (A1, A4) et au moins un aileron interne (A2, A3),
**caractérisé en ce que** :
- on détermine un premier ordre de commande (dZ) apte à contrecarrer les mouvements vibratoires verticaux d'au moins deux moteurs (M1, M4) symétriques par rapport audit fuselage (2) ;
- on détermine un second ordre de commande (dY) apte à contrecarrer les mouvements vibratoires latéraux desdits moteurs symétriques (M1, M4) ;
- on applique ledit premier ordre de commande (dZ) à au moins deux ailerons (A1, A4) d'un des deux types, disposés symétriquement par rapport audit fuselage, de façon que ces deux ailerons se cabrent de façon symétrique dans le même sens ; et
- on applique ledit second ordre de commande (dY) à au moins deux ailerons (A2, A3) de l'autre des deux types, également disposés symétriquement par rapport audit fuselage, de façon que ces deux ailerons se braquent de façon antisymétrique en sens opposés.

8. Procédé selon l'une des revendications 1 à 6, appliqué à un aéronef comportant plusieurs moteurs par aile,
**caractérisé en ce qu'**il est mis en oeuvre pour les seuls moteurs externes de l'aéronef.

9. Dispositif pour réduire les mouvements vibratoires du fuselage d'un aéronef, lesdits mouvement vibratoires étant engendrés par les moteurs dudit aéronef qui comporte deux ailes fixes symétriques par rapport audit fuselage, chacune desdites ailes étant pourvue de gouvernes articulées sur son bord de fuite et portant au moins un desdits moteurs,
**caractérisé en ce qu'**il comporte :
- des accéléromètres associés à au moins deux moteurs symétriques l'un de l'autre par rapport audit fuselage et aptes à mesurer les accélérations respectives de ces moteurs suivant au moins une direction transversale auxdits moteurs ;
- au moins une table dans laquelle sont enregistrées des relations préétablies à partir du modèle aéroélastique concernant spécifiquement ledit aéronef ;
- des moyens de calcul aptes à calculer, à l'aide des mesures accélérométriques délivrées par lesdits accéléromètres et des relations préétablies de ladite table, au moins un ordre de commande qui, appliqué à des gouvernes symétriques par rapport audit fuselage, est apte à contrecarrer les mouvements vibratoires desdits moteurs dans ladite direction ; et
- des moyens pour appliquer ledit ordre de commande auxdites gouvernes.

10. Dispositif selon la revendication 9, pour un aéronef pourvu d'un système de commandes de vol électriques,
**caractérisé en ce que** lesdits moyens de calcul et lesdits moyens d'application dudit ordre de commande font partie dudit système de commandes de vol électriques.

## Claims

1. A method for reducing the vibratory motions of the fuselage (2) of an aircraft (1), said vibratory motions being engendered by the engines of said aircraft which comprises two fixed wings (3, 4) which are symmetric with respect to said fuselage (2), each of said wings (3, 4) being provided with control surfaces (A1 to A4) articulated to its trailing edge and bearing at least one of said engines (M1 to M4),
**characterized in that**:
- at least one accelerometer (9, 10) is associated with at least one engine (M1 to M4);
- the accelerations undergone by said engine, thus equipped with at least one accelerometer, are measured in at least one direction transverse to said engine;
- with the aid of the accelerometric measurements thus obtained, at least one oscillatory control command (dZ, dY) is determined which, applied to at least one control surface of the wing bearing said engine, is able to counteract the vibratory motions of said engine in said direction, said control command (dZ, dY) being determined from preestablished relations which emanate from the aeroelastic model (23, 28), specific to said aircraft, and which, for each acceleration undergone by said aircraft at the location of said engine and in said direction, are able to deliver such a control command (dZ, dY) ; and
- said control command is applied to said control surface.

2. The method as claimed in claim 1,
**characterized in that** :
- at least one accelerometer (9, 10) is associated with at least one engine (M1 to M4) of each wing (3, 4);
- the accelerations undergone by each of said engines, thus each equipped with at least one accelerometer, are measured in at least one direction transverse to said engine; and
- with the aid of the accelerometric measurements thus obtained, said oscillatory control command (dZ, dY) is determined.

3. The method as claimed in one of claims 1 or 2,
**characterized in that**:
- the accelerations undergone by two engines (M1, M4) of said aircraft, which are symmetric with respect to said fuselage (2), are measured in said direction transverse to said engines;
- the average of said accelerations undergone by these two symmetric engines is calculated;
- a common control command (dZ, dY) is determined with the aid of said relations preestablished from said aeroelastic model (23, 28); and
- said common control command is applied to two control surfaces which are symmetric with respect to said fuselage.

4. The method as claimed in one of claims 1 to 3,
**characterized in that** a direction of measurement of said accelerations is vertical.

5. The method as claimed in one of claims 1 to 4,
**characterized in that** a direction of measurement of said accelerations is horizontal, that is to say lateral with respect to said aircraft (1).

6. The method as claimed in one of claims 1 to 5,
**characterized in that** said control surfaces chosen to counteract the motions of said engines are ailerons.

7. The method as claimed in one of claims 1 to 6, in which each wing of said aircraft (1) comprises at least two types of ailerons, namely at least one outer aileron (A1, A4) and at least one inner aileron (A2, A3),
**characterized in that**:
- a first control command (dZ) able to counteract the vertical vibratory motions of at least two engines (M1, M4) which are symmetric with respect to said fuselage (2) is determined;
- a second control command (dY) able to counteract the lateral vibratory motions of said symmetric engines (M1, M4) is determined;
- said first control command (dZ) is applied to at least two ailerons (A1, A4) of one of the two types, disposed symmetrically with respect to said fuselage, in such a way that these two ailerons pull up symmetrically in the same direction; and
- said second control command (dY) is applied to at least two ailerons (A2, A3) of the other of the two types, likewise disposed symmetrically with respect to said fuselage, in such a way that these two ailerons deflect antisymmetrically in opposite directions.

8. The method as claimed in one of claims 1 to 6, applied to an aircraft comprising several engines per wing,
**characterized in that** it is implemented only for the outer engines of the aircraft.

9. A device for reducing the vibratory motions of the fuselage of an aircraft, said vibratory motions being engendered by the engines of said aircraft which comprises two fixed wings which are symmetric with respect to said fuselage, each of said wings being provided with control surfaces articulated to its trailing edge and bearing at least one of said engines,
**characterized in that** it comprises:
- accelerometers associated with at least two engines mutually symmetric with respect to said fuselage and able to measure the respective accelerations of these engines in at least one direction transverse to said engines;
- at least one table in which are recorded relations preestablished from the aeroelastic model relating specifically to said aircraft;
- means of calculation able to calculate, with the aid of the accelerometric measurements delivered by said accelerometers and of the preestablished relations of said table, at least one control command which, applied to control surfaces which are symmetric with respect to said fuselage, is able to counteract the vibratory motions of said engines in said direction; and
- means for applying said control command to said control surfaces.

10. The device as claimed in claim 9, for an aircraft provided with a system of electric flight controls,
**characterized in that** said means of calculation and said means of application of said control command form part of said system of electric flight controls.

## Patentansprüche

1. Verfahren zum Vermindern der Vibrationsbewegungen des Rumpfes (2) eines Flugzeugs (1), wobei die Vibrationsbewegungen von den Motoren des Flugzeugs, das zwei starre, bezüglich des Rumpfes (2) symmetrisch angeordnete Flügel (3, 4) umfasst, erzeugt werden, wobei jeder der Flügel (3, 4) mit an seiner Hinterkante angelenkten Steuerflächen (A1 bis A4) ausgestattet ist und mindestens einen der Motoren (M1 bis M4) trägt,
**dadurch gekennzeichnet, dass**:
- mindestens einem Motor (M1 bis M4) wenigstens ein Beschleunigungsmesser (9, 10) zugeordnet wird,
- die Beschleunigungen, denen der auf diese Weise mit wenigstens einem Beschleunigungsmesser ausgerüstete Motor unterworfen ist, zumindest in einer Querrichtung zu dem Motor gemessen werden,
- mithilfe der auf diese Weise erhaltenen Beschleunigungsmessungen mindestens ein oszillatorischer Steuerbefehl (dZ, dY) bestimmt wird, der, wenn er auf mindestens eine Steuerfläche des den Motor tragenden Flügels angewandt wird, geeignet ist, den Vibrationsbewegungen des Motors in dieser Richtung entgegenzuwirken, wobei der Steuerbefehl (dZ, dY) aus vorgegebenen Relationen bestimmt wird, die aus einem flugzeugeigenen aeroelastischen Modell (23, 28) hervorgegangen sind und die geeignet sind, für jede Beschleunigung, der das Flugzeug am Ort des Motors und in diese Richtung unterworfen ist, einen solchen Steuerbefehl (dZ, dY) abzugeben und
- der Steuerbefehl auf die Steuerfläche angewandt wird.

2. Verfahren nach Anspruch 1,
**dadurch gekennzeichnet, dass**:
- mindestens einem Motor (M1 bis M4) jedes Flügels (3, 4) wenigstens ein Beschleunigungsmesser (9, 10) zugeordnet wird,
- die Beschleunigungen, denen jeder der auf diese Weise jeweils mit wenigstens einem Beschleunigungsmesser ausgerüsteten Motoren unterworfen ist, in der Querrichtung zu dem Motor gemessen werden und
- mithilfe der auf diese Weise erhaltenen Beschleunigungsmessungen der oszillatorische Steuerbefehl (dZ, dY) bestimmt wird.

3. Verfahren nach Anspruch 1 oder 2,
**dadurch gekennzeichnet, dass**:
- die Beschleunigungen, denen zwei bezogen auf den Rumpf (2) symmetrisch angeordnete Motoren (M1, M4) des Flugzeugs unterworfen sind, in der Querrichtung zu den Motoren gemessen werden,
- der Mittelwert der Beschleunigungen, denen diese beiden symmetrisch angeordneten Motoren unterworfen sind, berechnet wird,
- mithilfe der aus dem aeroelastischen Modell (23, 28) vorgegebenen Relationen ein gemeinsamer Steuerbefehl (dZ, dY) bestimmt wird und
- der gemeinsame Steuerbefehl auf zwei bezogen auf den Rumpf symmetrisch angeordnete Steuerflächen angewandt wird.

4. Verfahren nach einem der Ansprüche 1 bis 3,
**dadurch gekennzeichnet, dass** eine Messrichtung der Beschleunigungen vertikal ist.

5. Verfahren nach einem der Ansprüche 1 bis 4,
**dadurch gekennzeichnet, dass** eine Messrichtung der Beschleunigungen horizontal ist, d.h. lateral bezogen auf das Flugzeug (1).

6. Verfahren nach einem der Ansprüche 1 bis 5,
**dadurch gekennzeichnet, dass** die Steuerflächen, die gewählt werden, um den Bewegungen der Motoren entgegenzuwirken, Querruder sind.

7. Verfahren nach einem der Ansprüche 1 bis 6, bei dem jeder Flügel des Flugzeugs (1) mindestens zwei Arten von Querrudern umfasst, und zwar mindestens ein Außenquerruder (A1, A4) und mindestens ein Innenquerruder (A2, A3),
**dadurch gekennzeichnet, dass**:
- ein erster Steuerbefehl (dZ) bestimmt wird, der geeignet ist, den vertikalen Vibrationsbewegungen von mindestens zwei bezogen auf den Rumpf (2) symmetrisch angeordneten Motoren (M1, M4) entgegenzuwirken,
- ein zweiter Steuerbefehl (dY) bestimmt wird, der geeignet ist, den lateralen Vibrationsbewegungen der symmetrisch angeordneten Motoren (M1, M4) entgegenzuwirken,
- der erste Steuerbefehl (dZ) derart auf mindestens zwei bezogen auf den Rumpf symmetrisch angeordnete Querruder (A1, A4) von einer der beiden Arten angewandt wird, dass diese beiden Querruder symmetrisch in die gleiche Richtung aufgestellt werden und
- der zweite Steuerbefehl (dY) derart auf mindestens zwei ebenfalls bezogen auf den Rumpf symmetrisch angeordnete Querruder (A2, A3) der anderen der beiden Arten angewandt wird, dass diese beiden Querruder antisymmetrisch in entgegengesetzte Richtungen ausgeschlagen werden.

8. Verfahren nach einem der Ansprüche 1 bis 6, eingesetzt bei einem Flugzeug, das mehrere Motoren pro Flügel aufweist,
**dadurch gekennzeichnet, dass** es nur bei den Außenmotoren des Flugzeugs eingesetzt wird.

9. Vorrichtung zum Vermindern der Vibrationsbewegungen des Rumpfes eines Flugzeugs, wobei die Vibrationsbewegungen von den Motoren des Flugzeugs, das zwei starre, bezüglich des Rumpfes symmetrisch angeordnete Flügel umfasst, erzeugt werden, wobei jeder der Flügel mit an seiner Hinterkante angelenkten Steuerflächen ausgestattet ist und mindestens einen der Motoren trägt,
**dadurch gekennzeichnet, dass** sie Folgendes umfasst:
- Beschleunigungsmesser, die mindestens zwei bezogen auf den Rumpf zueinander symmetrisch angeordneten Motoren zugeordnet sind und die geeignet sind, die jeweiligen Beschleunigungen dieser Motoren zumindest in einer Querrichtung zu den Motoren zu messen,
- mindestens eine Tabelle, in der ausgehend von dem spezifisch auf das Flugzeug bezogenen aeroelastischen Modell vorbestimmte Relationen gespeichert sind,
- Berechnungsmittel, die geeignet sind, mithilfe der von den Beschleunigungsmessern gelieferten Beschleunigungsmessungen und der vorbestimmten Relationen der Tabelle, mindestens einen Steuerbefehl zu berechnen, der, wenn er auf zum Rumpf symmetrisch angeordnete Steuerflächen angewandt wird, geeignet ist, den Vibrationsbewegungen der Motoren in dieser Richtung entgegenzuwirken und
- Mittel, um den Steuerbefehl auf die Steuerflächen anzuwenden.

10. Vorrichtung nach Anspruch 9 für ein Flugzeug, das mit einem elektrischen Flugreglersystem ausgestattet ist,
**dadurch gekennzeichnet, dass** die Berechnungsmittel und die Mittel zur Anwendung des Steuerbefehls Teil des elektrischen Flugreglersystems sind.
